# EUROPÄISCHE PATENTANMELDUNG

(11) **EP 1 041 103 A2**
(43) Veröffentlichungstag der Anmeldung: **04.10.2000**
(21) Anmeldenummer: 00102337.3
(22) Anmeldetag: 03.02.2000
(51) Int. Cl.: C08J 5/12

(54) **Verbundgegenstand aus Polyestern und Elastomeren**

(30) Priorität: 29.03.1999 DE 19914161
(71) Anmelder: Degussa-Hüls Aktiengesellschaft, 60287 Frankfurt am Main (DE)
(72) Erfinder: Grosse-Puppendahl, Thomas, 45721 Haltern (DE); Hellermann, Walter, Dr., 46282 Dorsten (DE)

(57) **Zusammenfassung**

Verbundgegenstände aus einem thermoplastischen Polyester und einem Vulkanisat werden dadurch erhalten, daß das Vulkanisat unter üblichen Vulkanisationsbedingungen im Kontakt mit der harten Komponente durch Vulkanisation einer Kautschukzusammensetzung hergestellt wird, die folgende Komponenten enthält:
I. 100 Gew. -Teile eines Kautschuks,
II. 0 bis 300 Gew.-Teile Füllstoffe,
III. 1 bis 10 Gew.-Teile Vulkanisationsmittel,
IV. 0 bis 4 Gew.-Teile Vulkanisationsaktivatoren,
V. 0 bis 150 Gew.-Teile Weichmacher,
wobei
a) wahlweise die harte und/oder die weiche Komponente zusätzlich 0,5 bis 12 Gew.-Teile eines Gemisches zweier di- oder polyfunktioneller Maleinimide enthält und
b) im Falle, daß die harte Komponente kein di- oder polyfunktionelles Maleinimid enthält, der Kautschuk Carboxyl- oder Säureanhydridgruppen besitzt,
dadurch gekennzeichnet,
daß ein an den Doppelbindungen unsubstituiertes und ein an den Doppelbindungen substituiertes Maleinimid zusammen eingesetzt wird.

Nach diesem Verfahren wird ein fester Verbund erhalten.

## Beschreibung

Die vorliegende Erfindung betrifft ein Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist. Die Erfindung betrifft weiterhin die nach diesem Verfahren erhaltenen Gegenstände.

Verbundgegenstände aus Polyester und einem Vulkanisat sind bereits aus der EP-A-0 683 195 bekannt. Sie werden dort durch ein Verfahren hergestellt, bei dem man eine harte Komponente auf Basis eines thermoplastischen Polyesters verwendet und bei der weichen Komponente von einer Kautschukzusammensetzung ausgeht, die im Kontakt mit der harten Komponente unter üblichen Vulkanisationsbedingungen vulkanisiert wird und folgende Komponenten enthält:
I. 100 Gew.-Teile eines Kautschuks,
II. 0 bis 300 Gew.-Teile Füllstoffe,
III. 1 bis 10 Gew.-Teile peroxidische Vulkanisationsmittel,
IV. 0 bis 4 Gew. -Teile Vulkanisationsaktivatoren sowie
V. 0 bis 150 Gew.-Teile Weichmacher,
dadurch gekennzeichnet, daß
a) wahlweise die harte und/oder die weiche Komponente zusätzlich 0,5 bis 12 Gew.-Teile eines di- oder polyfunktionellen Maleinimids der allgemeinen Formel 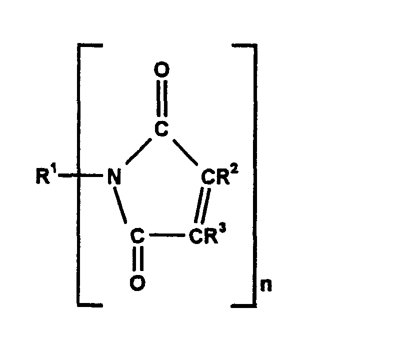 enthält,
   und
b) im Falle, daß die harte Komponente kein di- oder polyfunktionelles Maleinimid enthält, der Kautschuk Carboxyl- oder Säureanhydridgruppen besitzt.

Allerdings hat sich in der Praxis herausgestellt, daß in sehr vielen Fällen dann, wenn R² und R³ ein Wasserstoffatom darstellen, zwar eine ausgezeichnete Haftung erhalten wird, bei längerem Lagern der Formmasse, des Kautschukcompounds oder des daraus hergestellten Verbundkörpers jedoch das überschüssige Maleinimid ausblüht und aufgrund seiner gelben Eigenfarbe sehr deutlich auf der Oberfläche des Teils zu erkennen ist. Dieses Problem tritt besonders ausgeprägt beispielsweise bei der Verwendung von m-Phenylen-bismaleinimid oder von 4,4 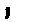 -Diphenylmethanbismaleinimid auf. Da diese Maleinimide im übrigen sehr wirksam und zudem handelsüblich sind möchte man aber von deren Verwendung nicht grundsätzlich abkehren.

Jedoch sind die bislang vorzugsweise verwendeten Bismaleinimide teuer. Alternativsysteme sollten bei gleicher Wirksamkeit kostengünstiger sein.

Somit bestand die Aufgabe darin, bei der Herstellung von Polyester-Elastomer-Verbundkörpern gemäß der EP-A-0 683 195 ein Maleinimidsystem einzusetzen, das nicht zu Ausblühungen an der Oberfläche führt und zudem kostengünstiger ist. Zusätzlich erwünscht war, daß dieses Maleinimidsystem nicht nur bei peroxidischer Vulkanisation der Kautschukkomponente, wie es aus der EP-A-0 683 195 bekannt ist, zu einer starken Haftung führen sollte, sondern auch bei der weithin gebräuchlichen Vulkanisation durch Schwefel.

Diese Aufgaben wurden mit einem Verfahren gelöst, das darin besteht, daß man eine harte Komponente auf Basis eines thermoplastischen Polyesters verwendet und bei der weichen Komponente von einer Kautschukzusammensetzung ausgeht, die im Kontakt mit der harten Komponente unter üblichen Vulkanisationsbedingungen vulkanisiert wird und folgende Komponenten enthält:
I. 100 Gew.-Teile eines Kautschuks,
II. 0 bis 300 Gew.-Teile Füllstoffe,
III. 1 bis 10 Gew.-Teile Vulkanisationsmittel,
IV. 0 bis 4 Gew.-Teile Vulkanisationsaktivatoren sowie
V. 0 bis 150 Gew.-Teile Weichmacher,
wobei
a) wahlweise die harte und/oder die weiche Komponente zusätzlich 0,5 bis 12 Gew.-Teile eines Gemisches mindestens zweier di- oder polyfunktioneller Maleinimide der allgemeinen Formel 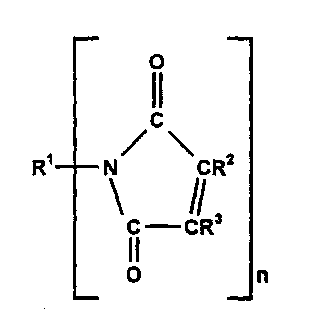 enthält,
   wobei R¹ ein beliebiger zwei- oder mehrwertiger Rest oder eine direkte Bindung sein kann, n für eine Zahl größer oder gleich 2, vorzugsweise 2 bis 4, steht, und
b) im Falle, daß die harte Komponente kein di- oder polyfunktionelles Maleinimid enthält, der Kautschuk Carboxyl- oder Säureanhydridgruppen besitzt,
   dadurch gekennzeichnet, daß das Maleinimid-Gemisch zusammengesetzt ist aus
   A. 10 bis 90 Gew.-% mindestens eines Maleinimids, bei dem R² und R³ Wasserstoff darstellen, und
   B. 90 bis 10 Gew.-% mindestens eines Maleinimids, bei dem R² Alkyl, Cycloalkyl oder Aryl mit jeweils maximal 20 C-Atomen darstellt und R³, unabhängig hiervon, die gleiche Bedeutung wie R² haben kann oder Wasserstoff ist.

Über den hier wirksamen Bindungsmechanismus zwischen Polyester und Vulkanisat liegen noch keine gesicherten Erkenntnisse vor.

Im folgenden sollen die einzelnen Bestandteile der harten und der weichen Komponente näher erläutert werden.

Die harte Komponente auf Basis von Polyester kann ein Polyester, eine Polyesterformmasse, ein Polyesterblend oder ein Faserverbundwerkstoff mit Polyestermatrix sein.

Hierbei wird der thermoplastische Polyester in bekannter Weise durch Umesterung bzw. Veresterung von aromatischen Dicarbonsäuren mit 8 bis 14 C-Atomen bzw. deren Estern mit geeigneten Diolen und anschließender Polykondensation hergestellt [vgl. "Polymer Chemistry", Interscience Publ., New York, 1961, S. 111 - 127; Kunststoffhandbuch, Band VIII, C. Hanser Verlag, München, 1973 und Journal of Polymer Science, Part A1, **4**, Seiten 1851 - 1859 (1966)].

Hinsichtlich näherer Einzelheiten sei auf die ausdrücklich in Bezug genommene EP-A-0 683 195 verwiesen.

In einer bevorzugten Ausführungsform basiert die Dicarbonsäurekomponente des Polyesters auf Terephthalsäure.

Besonders bevorzugt werden als Polyester Poly(ethylenterephthalat) und Poly(butylenterephthalat) eingesetzt.

Die Wirkung des di- oder polyfunktionellen Maleinimids kann in manchen Fällen noch in gewissem Maße gesteigert werden, wenn der Polyester aliphatische Doppelbindungen enthält. So verwendet man in einer weiteren Ausführungsform Polyester mit einer Dicarbonsäurekomponente auf Basis von Terephthalsäure und einer Diolkomponente, die zu 0 bis 99,9 Mol-% aus Butandiol-(1,4) und zu 0,1 bis 100 Mol-% aus Butendiol-(1,4) besteht. Insbesondere besteht die Diolkomponente aus 50 bis 99 Mol-% Butandiol-(1,4) und 1 bis 50 Mol-% Butendiol-(1,4).

Selbstverständlich kann der eventuell gewünschte Doppelbindungsgehalt des Polyesters dadurch eingestellt werden, daß man eine Mischung eines doppelbindungshaltigen und beispielsweise eines doppelbindungsfreien Polyesters verwendet.

Polyesterformmassen im Sinne dieser Erfindung sind dem Stand der Technik entsprechende Aufbereitungen von Polyestern, die zur Verbesserung der Verarbeitungseigenschaften oder zur Modifizierung der Gebrauchseigenschaften vorgenommen wurden. Polyesterformmassen enthalten z. B. Stabilisatoren, Gleitmittel, Füllstoffe wie etwa Ruß, Graphit, Metallflitter, Titandioxid und Zinksulfid, Verstärkungsmittel wie etwa Glas-, Kohle-, Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übrigen Zusatzstoffe insgesamt bis zu 10 Gew.-%, jeweils bezogen auf die gesamte Formmasse, betragen.

Polyesterblends im Sinne dieser Erfindung sind Formmassen, die aus Polyestern und anderen Polymeren sowie den bei den Polyesterformmassen gebräuchlichen Additiven zusammengesetzt sind. Die Polymerbestandteile können ineinander löslich sein oder der eine Polymerbestandteil in dem anderen dispers verteilt sein, oder beide können miteinander interpenetrierende Netzwerke bilden.

Im Rahmen der vorliegenden Erfindung kann prinzipiell jedes bekannte Polyesterblend verwendet werden. Als Beispiele seien genannt: PBT/PC- oder PET/PC-Blends, schlagzähmodifizierte Polyester, die als Schlagzähkomponente etwa maleinsäureanhydrid- oder glycidylmethacrylatmodifizierte Kautschuke enthalten, Polyester/Polyamid-Blends, Blends aus Polyestern und Polyolefinen sowie Blends aus Polyestern und PMMA, PMMI, ABS, Epoxyharzen oder Blockcopolyetherester-Elastomeren. Beschrieben sind derartige Systeme beispielsweise in folgenden Publikationen: Polymer Blends, Ed.: E. Martus-celli, R. Palumbo und M. Kryszewski, Plenum Press, New York, 1980; Polymer Alloys III, Ed.: D. Klempner und K. C. Frisch, Plenum Press, New York, 1983; WO-A-87/00850; EP-A-0 037 547; EP-A-0 276 327 sowie H. Saechtling, Kunststoff-Taschenbuch, 25. Auflage, C. Hanser Verlag, München, Wien, 1992.

Der Polyesteranteil in den Polyesterblends sollte hierbei, bezogen auf die Summe aller polymeren Komponenten, mindestens 30 Gew.-% betragen.

Als Faserverbundwerkstoffe mit Polyestermatrix sollen Werkstoffe verstanden werden, die aus ungeschnittenen Verstärkungsfasern oder Geweben daraus einerseits und einer Matrix aus Polyestern, Polyesterformmassen oder Polyesterblends andererseits zusammengesetzt sind.

Faserverbundwerkstoffe mit einer Matrix aus Polyestern, Polyesterformmassen oder Polyesterblends können auf verschiedene Weise hergestellt werden; beispielsweise können mit Polyestern imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyesterfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Die im erfindungsgemäßen Verfahren eingesetzte Kautschukzusammensetzung enthält unter den angegebenen Umständen einen Carboxyl- bzw. Anhydridgruppen enthaltenden Kautschuk, der beispielsweise in bekannter Weise durch Carboxylierung mit ungesättigten Säuren oder Säurederivaten, wie z. B. Maleinsäure oder Maleinsäureanhydrid, hergestellt wird (vgl. z. B. US-PS 4 010 223). Es ist auch möglich, diese Kautschuke durch Copolymerisation mit ungesättigten Säuren wie z. B. Acrylsäure herzustellen. Grundsätzlich sind alle Carboxyl- oder Anhydridgruppen enthaltenden Kautschuke geeignet, die sich auf bekannte Weise herstellen lassen.

Eine generelle Untergrenze für den Carboxylgehalt oder die Säurezahl läßt sich nicht angeben, da diese je nach verwendetem Kautschuktyp und je nach Art und Menge des zugesetzten di- oder polyfunktionellen Maleinimids unterschiedlich ist. Als Untergrenze soll daher der Wert angesehen werden, bei dem sich die erfindungsgemäße Wirkung gerade noch einstellt. Dieser Wert läßt sich durch wenige Routineversuche ermitteln.

Der für die weiche Komponente verwendete Kautschuk kann beispielsweise ein EP(D)M-Kautschuk, ein SB-Kautschuk (als E-SBR oder L-SBR), BR, NR, IR, IIR, CIIR, BIIR, NBR, CR, ein styrolhaltiges Blockcopolymer und/oder ein Polyalkenylen sein. Bezüglich näherer Einzelheiten sei auf die ausdrücklich in Bezug genommene EP-A-0 683 195 verwiesen.

Der verwendete Kautschuk kann auch ein radikalisch vernetzbarer Silikonkautschuk sein.

Entsprechend den unterschiedlichen Vulkanisationsbedingungen lassen sich die Silikonkautschuke im wesentlichen in vier Klassen einteilen:
- Einkomponentige, bei Raumtemperatur vernetzende Kautschuke
- Zweikomponentige, bei Raumtemperatur vernetzende Kautschuke
- Flüssig-Silikonkautschuk
- Silikon-Kautschukmischungen für Heißvulkanisate

Die Flüssig-Silikonkautschuke werden auf Spritzgießmaschinen verarbeitet, wie sie für die Verarbeitung von Thermoplasten üblich sind. Der Kautschuk besteht aus zwei Komponenten, die in der Regel im Verhältnis 1 : 1 kalt gemischt und in die heiße Form gespritzt werden.

Für die erfindungsgemäßen Polyesterverbunde werden im wesentlichen Flüssig-Silikonkautschuk oder Silikon-Kautschukmischungen für Heißvulkanisate verwendet, da sich diese Kautschukmischungen mit den üblichen Peroxiden vernetzen lassen. Im Zweifelsfalle ist den Herstellerangaben zu folgen oder die Eignung eines bestimmten Typs anhand eines Routineversuchs zu überprüfen.

Als Füllstoffe eignen sich alle Stoffe, die üblicherweise in Kautschuken eingesetzt werden, wie z. B. Ruß, Kieselsäure, Silikate, Calciumcarbonat, Zinkoxid und Talkum. Bei Verwendung hochaktiver Füllstoffe wird zum Erreichen einer Verbundhaftung eine erhöhte Menge der di- oder polyfunktionellen Maleinimide benötigt.

Geeignete Weichmacher sind insbesondere naphthenische und/oder aliphatische Öle oder spezielle, in der Kautschuktechnologie übliche Weichmacher wie z. B. Polyalkoholfettsäureester oder Thioether in einer Menge von vorzugsweise bis zu 50 Gewichtsteilen, bezogen auf 100 Gewichtsteile Kautschuk.

Als Vulkanisationsmittel werden bevorzugt peroxidische Verbindungen eingesetzt, da diese die größte Anwendungsbreite haben. Auf Schwefel oder schwefelspendenden Reagentien basierende Vulkanisationsmittel sind jedoch ebenfalls geeignet.

Geeignete peroxidische Vulkanisationsmittel sind die dem Fachmann zur Vernetzung von Kautschuken bekannten Peroxide wie z. B. 2,5-Dimethyl-2,5-bis(tert.-butylperoxy)-hexan, Dicumylperoxid, 4,4-Di-tert.-butylperoxy-n-butylvalerat, 1,1-Di-tert.-butylperoxy-3,3,5-trimethyl-cyclohexan und Bis(tert.-butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationsaktivatoren eignen sich beispielsweise Triallylcyanurat (TAC) und Acrylate wie Ethylenglykoldimethacrylat (EDMA), Butandioldimethacrylat (BDMA) und Trimethylolpropantrimethacrylat (TRIM).

Die Kautschukzusammensetzungen können darüber hinaus weitere Zusätze enthalten, wie z. B. Vulkanisationsverzögerer, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 50 Gew. -Teile aus. Die Herstellung solcher Compounds wird beispielsweise von F.W. Barrow in "Rubber Compounding", erschienen 1988 bei Marcel Dekker Inc., New York und Basel, oder bei W. Kleemann in "Mischungen für die Elastverarbeitung", erschienen 1982 (VEB Deutscher Verlag für Grundstoffindustrie), beschrieben.

Das an der Doppelbindung unsubstituierte Maleinimid (Verbindung Typ A) kann z. B. 1,3-Phenylen-bismaleinimid, 1,4-Phenylen-bismaleinimid, 3-Methyl-1,4-phenylen-bismaleinimid, 5-Methyl-1,3-phenylen-bismaleinimid, 4,4'-(N,N'-Bismaleinimido)-diphenylmethan, 2,4-Bismaleinimidotoluol, 3,3'-(N,N'-Bismaleinimido)-diphenylmethan, 3,3'-(N,N'-Bismaleinimido)-diphenylsulfon, 4,4'-(N,N'-Bismaleinimido)-diphenylsulfon, 1,2-Ethylen-bismaleinimid, 1,3-Propylen-bismaleinimid, 1,4-Butylen-bismaleinimid, 1,10-Decen-bismaleinimid, 1,12-Dodecen-bismaleinimid u. ä. sein.

Bevorzugt sind Bismaleinimide mit einem aromatischen Rest R¹, besonders bevorzugt sind 1,3-Phenylen-bismaleinimid, 2,4-Bismaleinimidotoluol bzw. 4,4'-(N,N'-Bismaleinimido)-diphenylmethan.

Als Maleinimid, das an der Doppelbindung substituiert ist (Verbindung Typ B), kommen beispielsweise 1,3-Bis(citraconimidomethyl)benzol oder weitere Verbindungen infrage, bei denen R² und/oder R³ für Methyl oder Ethyl steht.

Vom Maleinimid-Gemisch werden bevorzugt 1 bis 8 Gewichtsteile und besonders bevorzugt 1,25 bis 6 Gewichtsteile eingesetzt, bezogen jeweils auf 100 Gew.-Teile Kautschuk oder Polyester.

Das Maleinimid-Gemisch kann durch übliche Schmelzemischung in die Thermoplastkomponente eingearbeitet werden, beispielsweise mit Hilfe eines Zweiwellen- oder Buss-Co-Kneters. Es kann aber auch auf bekannte Weise in die Kautschukzusammensetzung eingemischt werden. In einer weiteren möglichen Ausführungsform wird es sowohl in die Thermoplastkomponente als auch in die Kautschukzusammensetzung eingearbeitet.

Der Verbund aus der harten Komponente auf Polyesterbasis und der elastomeren Komponente wird durch Vulkanisation des Kautschuk-Compounds im Kontakt mit der harten Komponente hergestellt.

Die Gegenstände aus den Polyestern, Polyesterformmassen oder Polyesterblends einerseits und Kautschuk-Compounds andererseits können hierbei einstufig oder zweistufig hergestellt werden. Gegenstände aus Faserverbundwerkstoffen und Kautschuk-Compounds werden zweistufig hergestellt.

Beim zweistufigen Prozeß wird zunächst das steife Formteil beispielsweise durch Spritzgießen, Extrudieren oder Konsolidieren von Prepregs hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Beim Beaufschlagen und Ausvulkanisieren nach dem zweistufigen Extrusionsverfahren wird z. B. ein in der ersten Stufe hergestelltes Profil aus dem Thermoplasten, etwa ein Rohr, mit der Kautschukmasse ummantelt und gegebenenfalls unter Druck ausvulkanisiert. Entsprechend verfährt man mit Platten, Vliesen, Geweben und Seilen.

Beim einstufigen Extrusionsverfahren wird der Verbundkörper durch Coextrusion von Thermoplast und Kautschukmasse hergestellt und anschließend vulkanisiert. Derart hergestellte Verbundprofile können beispielsweise für Dichtungszwecke verwendet werden.

Beim einstufigen Spritzgießverfahren arbeitet man analog zum einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des Polyesters, der Polyesterformmasse bzw. des Polyesterblends liegen sollte.

Die optimalen Vulkanisationsbedingungen hängen von der gewählten Kautschukmischung, insbesondere ihrem Vulkanisationssystem, und der Formteilgestaltung ab. Dabei kann man sich auf die bekannten Erfahrungswerte stützen, denn das zugesetzte Maleinimid-Gemisch beeinflußt die Reaktionsbedingungen nicht wesentlich.

Geeignete Massetemperaturen der Kautschukmischung im Zylinder liegen im allgemeinen im Bereich von 40 bis 80 °C, vorzugsweise von 60 bis 70 °C.

Geeignete Vulkanisationstemperaturen richten sich nach den Erweichungstemperaturen der Einlegeteile. Sie liegen im allgemeinen im Bereich von 140 bis 200 °C. Wenn die Erweichungsbereiche der Einlegeteile es zulassen, wählt man Temperaturen im oberen Bereich, z. B. zwischen 170 und 190 °C. Die Vulkanisationszeiten richten sich außer nach der Kautschukmischung nach den Vulkanisationstemperaturen und nach der Geometrie der Teile. Sie liegen im allgemeinen zwischen 30 s und 30 min; niedrigere Temperaturen und dickere Kautschukteile erfordern längere Zeiten.

Das erfindungsgemäße Verfahren sowie die damit hergestellten Verbunde zeichnen sich durch folgende Vorteile aus:
- Der Verbund ist vorzugsweise in wenigen Minuten hergestellt.
- Die im Verbundsystem eingesetzten Polyester besitzen eine hohe Wärmeformbeständigkeit, gute Lösemittelbeständigkeit, ein ausgezeichnetes Gleitreibungsverhalten sowie eine nur geringe Wasseraufnahme und sind auch im Außenbereich problemlos einsetzbar.
- Der Verbund ist so stark, daß es im Testfall in der Regel zu einem Kohäsionsbruch im Gummi, nicht jedoch zu einer Trennung an der Phasengrenzfläche kommt.
- Es werden keine Ausblühungen beobachtet.

Aus den Verbunden lassen sich beispielsweise folgende Gegenstände herstellen: gummibeschichtete Walzen, Flansche, Rohr- und Schlauchkupplungen, Dichtungsrahmen, stoß- und strahlungsabsorbierende Bauteile, Federelemente, Schwingungsdämpfer, verstärkte Gummiprofile, Transportbänder, Antriebsriemen, Andruckrollen für Video- und Audio-Band-Geräte, Dichtungen, insbesondere Wellendichtringe, Laufrollen, Kupplungs- und Bremsscheiben, Membranen, Kolben mit Dichtringen, verstärkte Faltenbälge, Pumpengehäuse und -klappen, polyesterverstärkte Gummischläuche etc.

Im folgenden soll die Erfindung beispielhaft erläutert werden.

### Beispiele

Für die Herstellung der Polyesterformmassen wurden folgende Materialien verwendet:
- VESTODUR 1000:: Ein Homopolybutylenterephthalat der Degussa-Hüls AG, D-45764 Marl
- VESTODUR GF 30:: Glasfaserverstärktes VESTODUR 1000 mit einem Gewichtsanteil von 30 % Schnittglasfasern (Degussa-Hüls AG, D-45764 Marl)
- HVA 2:: m-Phenylen-bismaleinimid der Fa. DuPont, Wilmington, Delaware, USA
- Perkalink 900:: 1,3-Bis(citraconimidomethyl)benzol der Fa. Flexys Additive für die Kautschukindustrie GmbH & Co. KG, D-52349 Düren
- BDMA:: Butandioldimethacrylat, 75 % auf Ca-Silikat der Fa. Lehmann & Voss

Für die Herstellung von Kautschukmischungen wurden folgende Materialien verwendet:
- BUNA EP G 6170:: ein statistischer EPDM-Kautschuk mit niedriger Ungesättigtheit, Mooney-Viskosität von ML (1 + 4) 125 °C = 59, Bayer AG, D-51368 Leverkusen
- BUNA EP G 5450:: ein statistischer EPDM-Kautschuk mit mittlerer Ungesättigtheit und einer Mooney-Viskosität von ML (1 + 4) 125 °C = 46, Bayer AG, D-51368 Leverkusen
- EXXELOR VA 1803:: ein maleinsäureanhydrid-(1 %)-modifizierter EPM-Kautschuk der Fa. Exxon Chemical, Köln
- Corax N 550:: Ruß der Fa. Degussa-Hüls AG mit einem CTAB-Wert von 42 m²/g
- Durex O:: Ruß der Fa. Degussa-Hüls AG mit einem CTAB-Wert von 20 m²/g
- Sillitin Z 86:: Aluminiumsilikat der Fa. Hoffmann Mineral, Neuburg/Donau, mit einer spezifischen Oberfläche von ungefähr 14 m²/g
- Sunpar 150:: paraffinisches Öl mit 14,1 % Aromaten der Fa. Sun Oil, Belgien
- Sunpar 2280:: paraffinisch (73 %)-naphthenisch (23 %)-aromatisches (4 %) Öl der Fa. Sun Oil, Belgien
- Titandioxid:: Lieferant Bayer AG, D-51368 Leverkusen
- ZnO:: Zinkoxid der Fa. Lehmann & Voss, Hamburg
- ZnO, RS:: Zinkoxid, Rotsiegel der Fa. Lehmann & Voss, Hamburg
- Vulkazit DM:: Dibenzothiazyldisulfid, Bayer AG, D-51368 Leverkusen
- Vulkanox HS:: polymerisiertes 2,2,4-Trimethyl-1,2-dihydrochinolin der Fa. Rhein-Chemie, Rheinau
- Dynasylan MEMO:: Methacryl-oxypropyl-trimethoxysilan der Fa. Degussa-Hüls AG, Marl
- Perkadox 14/40:: Bis-tert.-butylperoxy-isopropylbenzol 40%ig auf Kreide und SiO₂ der Fa. Akzo Chemicals, D-52349 Düren
- Perkacit TBzTD:: Tetrabenzylthiuramdisulfid, Akzo Chemicals, D-52349 Düren

Elastosil R 701/40 S, Elastosil R 701/80 S, Elastosil R 420/70 S und Elastosil R 420/40 S:
Mischungen hochmolekularer Polydiorganosiloxane und verstärkender Füllstoffe. Elastosil ist der Markenname für Silikonkautschuke der Fa. Wacker-Chemie GmbH, Burghausen.

### Herstellung von Polyesterformmassen

Die Herstellung erfolgte in einem Werner & Pfleiderer ZSK 30 M9/1-Kneter mit Standardschneckenkonfiguration bei 250 °C.

### Herstellung der Kautschukmischungen

Die Herstellung der einzelnen Kautschukmischungen erfolgte in einem Batch-Labor-Meßkneter (Fa. Haake). Bei einer Starttemperatur von 60 °C und einer Drehzahl von 64 UpM wurde zunächst 30 g des Kautschuks plastifiziert. Innerhalb von etwa fünf Minuten wurden die übrigen Komponenten eingearbeitet (mit Ausnahme des Vulkanisationssystems) und weitere drei Minuten homogenisiert. Während dieser Zeit stieg die Temperatur auf ca. 110 °C an. Diese Vormischung wurde anschließend mindestens 24 Stunden bei Raumtemperatur gelagert. Anschließend wurde bei gleichen Bedingungen (60 °C Starttemperatur, 64 UpM) das Vulkanisationssystem (einschließlich des Vulkanisationsaktivators BDMA, soweit verwendet) innerhalb von ca. vier Minuten homogen eingearbeitet.

### Herstellung der Verbunde

Von den untersuchten Polyester-Formmassen wurden Prüfkörper (100 x 100 x 4 mm) im Spritzgießverfahren bei einer Zylindertemperatur von 250 °C hergestellt. Anschließend wurde eine Platte in eine Form aus V2A-Stahl (100 x 100 x 8 mm) gelegt und mit einem 20 mm breiten Stück PTFE-Folie an einer Seite abgedeckt. Die Gesamtfläche wurde mit der zu prüfenden Kautschukmischung bedeckt. Die so präparierte Platte wurde in einer hydraulischen Presse (Schwabenthan - Polystat 200T) 20 Minuten bei 180 °C und 200 bar verpreßt.

### Prüfung der Verbundhaftung

Die Prüfung der Verbundhaftung zwischen Polyestermaterial und vulkanisiertem Kautschuk wurde mittels eines Schälversuches in Anlehnung an DIN 53 531 durchgeführt. Dabei wurde das Gummiteil, das durch die Teflonfolie bei der Vulkanisation vom Polyestermaterial getrennt gehalten wurde, so eingespannt, daß bei den Schälversuchen der Gummistreifen senkrecht zu der Thermoplastfläche abgezogen wurde. Die Ergebnisse sind in den Tabellen 2 und 4 wiedergegeben, wobei die Beurteilung folgendermaßen vorgenommen wurde:

Eine in den Tabellen angegebene Zahl, z. B. 50, beschreibt den Anteil an kohäsiver Haftung. 100 bedeutet in diesem Fall vollständige kohäsive Haftung; d. h. beim Schälversuch tritt ein Bruch im Kautschuk auf (hohe Trennkraft).

Eine Zahl kleiner als 100 beschreibt den prozentualen Anteil an kohäsivem Bruch. Für den Rest der Bruchfläche liegt eine starke adhäsive Haftung vor. 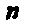 ad" bedeutet adhäsive Haftung (Bruch an der Phasengrenzfläche) mit mittlerer Trennkraft. 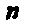 0" bedeutet keine Haftung, d. h. in diesem Fall liegt auch keine adhäsive Haftung und somit keine Trennkraft vor.

Alle Versuche sind in den Tabellen 1 bis 4 wiedergegeben.

Wie das Beispiel 1 zeigt, wird mit nur 1 Gew.-% HVA 2 gegenüber EP(D)M-basierenden Kautschukmischungen nur in wenigen Fällen eine gute Haftung erzielt. Setzt man zusätzlich 1 Gew. -% Perkalink 900 zu (Beispiel 2), so wird die Haftung schlagartig verbessert, obwohl das Beispiel 6 zeigt, daß Perkalink 900 alleine sogar in hoher Menge keine Haftung erzeugt. Dieser synergetische Effekt erlangt seine Bedeutung schon alleine dadurch, daß HVA 2 um den Faktor 2 bis 3 teurer ist als Perkalink 900.

Wie das nicht erfindungsgemäße Beispiel 3 zeigt, wird mit 2 Gew.-% HVA 2 ein Ausblühen aus der Formmasse bzw. dem Fertigteil beobachtet. Dieses Ausblühen läßt sich zwar durch gleichzeitigen Zusatz von 2 Gew.-% BDMA verhindern (nicht erfindungsgemäßes Beispiel 4), was aber in den meisten Fällen die Verbundhaftung deutlich verringert. Gemäß dem Beispiel 5 wird das Ausblühen auch durch Mitverwendung von 2 Gew.-% Perkalink 900 verhindert, wobei bei peroxidischer Vernetzung das Haftungsniveau weitgehend erhalten bleibt, während bei Schwefelvernetzung eine Haftung hierdurch erst möglich wird.

Gleiche Ergebnisse werden erhalten, wenn anstelle von HVA 2 andere zu Ausblühung neigende Maleinimide wie z. B. das ebenfalls handelsübliche 4,4 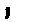 -Diphenylmethanbismaleinimid eingesetzt werden. Genauso werden gleiche Ergebnisse erhalten, wenn das Perkalink 900 durch strukturell ähnliche, an der Doppelbindung substituierte Maleinimide ersetzt wird.

Bei den Versuchen mit Silikonkautschuk-Mischungen (Beispiele 7 bis 14) fällt auf, daß zum Erzielen einer guten Haftung generell deutlich geringere Additivmengen als für EP(D)M-Kautschuk notwendig sind. Ohne Additiv wird aber auch hier keinerlei kohäsive oder adhäsive Haftung erzielt.

**Tabelle 1**

| Zusammensetzung der EPDM- bzw. EPM-Mischungen (in Gewichtsteilen) | | | | | | | |
|---|---|---|---|---|---|---|---|
| | A | B | C | D | E | F | G |
| BUNA EP G 6170 | 100,00 | | | | | | |
| BUNA EP G 5450 | | 100,00 | 100,00 | 100,00 | 100,00 | 100,00 | |
| EXXELOR VA 1803 | | | | | | | 100,00 |
| VESTENAMER 8012 | | 10,00 | 27,50 | | | | |
| Corax N 550 | | | 80,00 | 100,00 | | | |
| Durex O | 100,00 | 80,00 | | | | | |
| Sillitin Z 86 | | | | | 100,00 | 100,00 | 100,00 |
| Sunpar 150 | 30,00 | 20,00 | | | | | |
| Sunpar 2280 | | | 60,00 | 70,00 | 25,00 | 25,00 | 25,00 |
| Diethylenglykol | | | | | | | 2,00 |
| Titandioxid | | | | | | 5,00 | |
| ZnO | | | | 5,00 | 5,00 | 3,00 | 5,00 |
| ZnO, RS | 5,00 | 5,00 | 5,00 | | | | |
| Stearinsäure | | | | | | 1,50 | |
| Vulkacit DM | | | | | | 1,00 | |
| Vulkanox HS | 2,00 | 2,00 | 2,00 | | 1,00 | | 2,00 |
| Dynasylan MEMO | 2,00 | | | | | | |
| Schwefel | | | | | | 1,50 | |
| BDMA | | 1,50 | 1,50 | 1,00 | 1,50 | | 1,50 |
| Perkadox 14/40 | 7,50 | 6,00 | 6,00 | 6,00 | 6,00 | | 6,00 |
| Perkacit TBzTD | | | | | | 1,00 | |

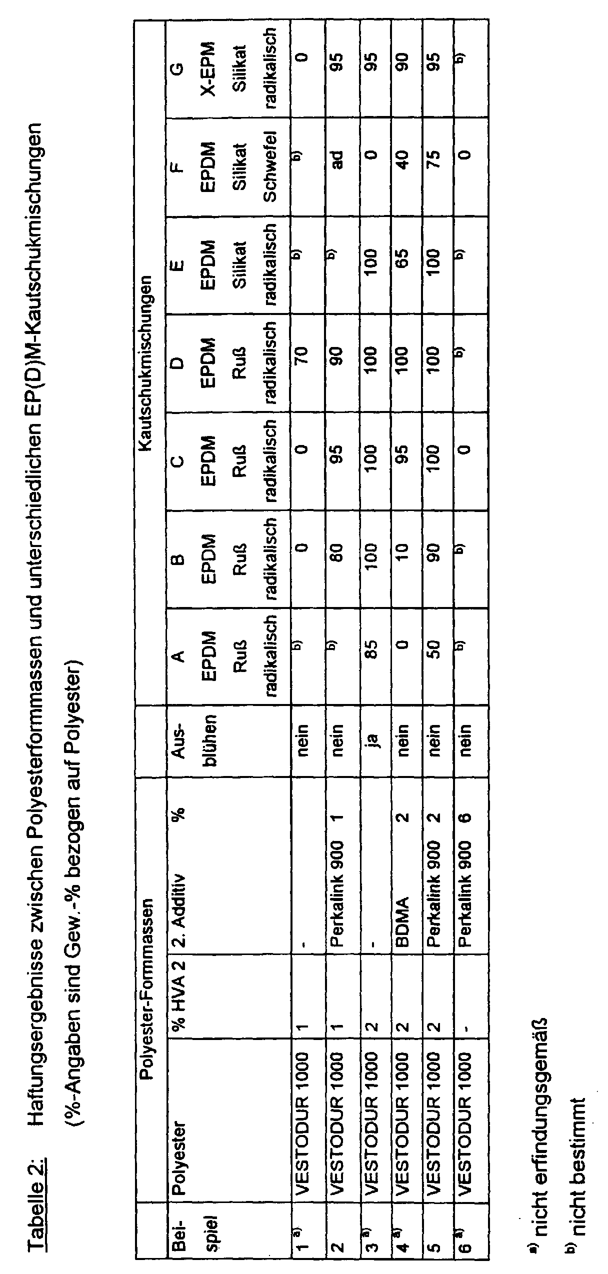

**Tabelle 3**

| Zusammensetzung der Silikonkautschuk-Mischungen (in Gewichtsteilen) | | | | |
|---|---|---|---|---|
| | H | I | J | K |
| Elastosil R 701/40 S | 97,00 | 43,00 | | |
| Elastosil R 70/180 S | | 54,00 | | 97,00 |
| Elastosil R 420/70 S | | | 58,00 | |
| Elastosil R 420/40 S | | | 39,00 | |
| Ruß | 1,00 | 1,00 | 1,00 | 1,00 |
| Dicumylperoxid | 2,00 | 2,00 | 2,00 | 2,00 |

**Tabelle 4**

| Haftungsergebnisse zwischen Polyesterformmassen und unterschiedlichen Silikonkautschuk-Mischungen (%-Angaben sind Gew.-% bezogen auf Polyester) | | | | | | | | | |
|---|---|---|---|---|---|---|---|---|---|
| | Polyester-Formmassen | | | | | Kautschukmischungen | | | |
| Beispiel | Polyester | % HVA 2 | 2. Additiv | % | Ausblühen | H | I | J | K |
| 7 ^{a)} | VESTODUR 1000 | 0,5 | - | | nein | 90 | 0 | 0 | 0 |
| 8 | VESTODUR 1000 | 0,5 | Perkalink 900 | 1 | nein | ^{b)} | 95 | 85 | 95 |
| 9 | VESTODUR 1000 | 0,5 | Perkalink 900 | 2 | nein | ^{b)} | 100 | 100 | 100 |
| 10 ^{a)} | VESTODUR 1000 | 2,0 | - | | ja | 100 | 100 | 100 | 100 |
| 11 | VESTODUR 1000 | 2,0 | Perkalink 900 | 2 | nein | 100 | 100 | 100 | 100 |
| 12 | VESTODUR GF 30 | 0,75 | Perkalink 900 | 1 | nein | 100 | 100 | 40 | 100 |
| 13 | VESTODUR GF 30 | 1,0 | Perkalink 900 | 1 | nein | 100 | 100 | 65 | 100 |
| 14 | VESTODUR GF 30 | 2,0 | Perkalink 900 | 2 | nein | 100 | 100 | 100 | 100 |

| | | | | | | | | | |
|---|---|---|---|---|---|---|---|---|---|
| a) nicht erfindungsgemäß | | | | | | | | | |
| b) nicht bestimmt | | | | | | | | | |

## Patentansprüche

1. Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist, welches unter üblichen Vulkanisationsbedingungen im Kontakt mit der harten Komponente durch Vulkanisation einer Kautschukzusammensetzung hergestellt wird, die folgende Komponenten enthält:
I. 100 Gew.-Teile eines Kautschuks,
II. 0 bis 300 Gew.-Teile Füllstoffe,
III. 1 bis 10 Gew.-Teile Vulkanisationsmittel,
IV. 0 bis 4 Gew.-Teile Vulkanisationsaktivatoren,
V. 0 bis 150 Gew.-Teile Weichmacher,
und
a) wahlweise die harte und/oder die weiche Komponente zusätzlich 0,5 bis 12 Gew.-Teile eines Gemisches mindestens zweier di- oder polyfunktioneller Maleinimide der allgemeinen Formel 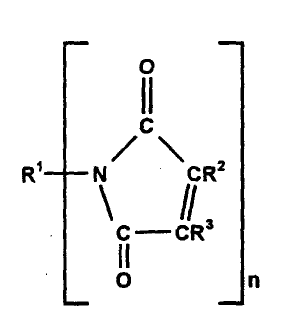 enthält,
wobei R¹ ein beliebiger zwei- oder mehrwertiger Rest oder eine direkte Bindung sein kann, n für eine Zahl größer oder gleich 2 steht, und
b) im Falle, daß die harte Komponente kein di- oder polyfunktionelles Maleinimid enthält, der Kautschuk Carboxyl- oder Säureanhydridgruppen besitzt,
dadurch gekennzeichnet,
daß das Maleinimid-Gemisch zusammengesetzt ist aus
A. 10 bis 90 Gew.-% mindestens eines Maleinimids, bei dem R² und R³ Wasserstoff darstellen, und
B. 90 bis 10 Gew.-% mindestens eines Maleinimids, bei dem R² Alkyl, Cycloalkyl oder Aryl mit jeweils maximal 20 C-Atomen darstellt und R³, unabhängig hiervon, die gleiche Bedeutung wie R² haben kann oder Wasserstoff ist.

2. Verfahren gemäß Anspruch 1,
dadurch gekennzeichnet,
daß die harte Komponente ein Polyester, eine Polyesterformmasse, ein Polyesterblend oder ein Faserverbundwerkstoff mit Polyestermatrix ist.

3. Verfahren gemäß einem der vorhergehenden Ansprüche,
dadurch gekennzeichnet,
daß die Dicarbonsäurekomponente des thermoplastischen Polyesters auf Terephthalsäure basiert.

4. Verfahren gemäß einem der vorhergehenden Ansprüche,
dadurch gekennzeichnet,
daß der Kautschuk ein EP(D)M-Kautschuk, E-SBR, L-SBR, BR, NR, IR, IIR₁ CIIR, BIIR, NBR, CR, ein styrolhaltiges Blockcopolymer, ein Polyalkenylen und/oder ein radikalisch vernetzbarer Silikonkautschuk ist.

5. Verfahren gemäß einem der vorhergehenden Ansprüche,
dadurch gekennzeichnet,
daß das Vulkanisationsmittel ein Peroxid ist.

6. Verfahren gemäß einem der Ansprüche 1 bis 4,
dadurch gekennzeichnet,
daß das Vulkanisationsmittel Schwefel oder ein schwefelspendendes Reagens ist.

7. Verfahren gemäß einem der vorhergehenden Ansprüche,
dadurch gekennzeichnet,
daß die Kautschukzusammensetzung darüber hinaus Vulkanisationsverzögerer, Alterungsschutzmittel, Verarbeitungshilfsmittel, Entformungsmittel und/oder Treibmittel enthält.

8. Verfahren gemäß einem der vorhergehenden Ansprüche,
dadurch gekennzeichnet,
daß das Maleinimid-Gemisch zu 1 bis 8 Gew. -Teilen und bevorzugt zu 1,25 bis 6 Gew.-Teilen eingesetzt wird.

9. Verfahren gemäß einem der vorhergehenden Ansprüche,
dadurch gekennzeichnet,
daß der Verbund im einstufigen oder im zweistufigen Prozeß hergestellt wird, wobei die Massetemperatur der Kautschukmischung im Zylinder im Bereich zwischen 40 und 80 °C und die Vulkanisationstemperatur im Bereich zwischen 140 und 200 °C liegen.

10. Verbundgegenstand, hergestellt nach einem der vorhergehenden Ansprüche.
